# EUROPÄISCHE PATENTSCHRIFT

(11) **EP 0 437 211 B1**
(45) Veröffentlichungstag und Bekanntmachung des Hinweises auf die Patenterteilung: **18.05.1994**
(21) Anmeldenummer: 91100095.8
(22) Anmeldetag: 02.01.1991
(51) Int. Cl.: B62H 5/00, B62J 11/00, F16B 2/08

(54) **Halterung zur Anbringung eines Anbauteils an einem Trägerstab**
Retention device for fixing an extension part on a carrying rod
Point d'attache pour la fixation d'une pièce de montage à un baton de support

(30) Priorität: 09.01.1990 DE 4000430
(43) Veröffentlichungstag der Anmeldung: 17.07.1991
(60) Teilanmeldung: 93104957.1
(73) Patentinhaber: Aug. Winkhaus GmbH & Co. KG, D-48291 Telgte (DE)
(72) Erfinder: Kortenbrede, Ludger, W-4404 Telgte (DE)
(74) Vertreter: Weickmann, Heinrich, Dipl.-Ing.

(56) Entgegenhaltungen:
- BE-A- 563 228
- DE-A- 3 201 135
- DE-A- 3 722 760
- DE-U- 8 905 160
- FR-A- 1 016 817
- FR-E- 70 048

## Beschreibung

Die Erfindung betrifft eine Halterung zur Anbringung eines Anbauteils an einem Trägerstab, insbesondere einem Trägerstab eines Fahrzeugrahmens, z.B. Fahrradrahmens, umfassend ein Klemmband zum Umschließen des Trägerstabs und eine Spannvorrichtung zum gleichzeitigen Klemmen des Klemmbands sowie Festlegen des Anbauteils an dem Klemmband.

Die in der deutschen Patentanmeldung P 39 13 471 gezeigten Halterungen werden entweder direkt oder mittels einer Befestigungseinrichtung am Trägerstab bzw. Fahrzeugrahmen angebracht. Verrutscht die Halterung während des Festspannens oder muß die richtige Position der Halterung am Trägerstab erst durch probeweises Anbrin- gen an verschiedenen Stellen des Trägerstabs herausgefun- den werden, so muß jedesmal die festgesetzte Spannvorrichtung der Halterung nahezu vollständig gelöst, die Position verändert und anschließend die Spannvorrichtung wiederum verspannt werden. Das Anbringen der Halterung in der gewünschten Position kann also hierbei verhältnismäßig umständlich sein.

Aus der DE-PS 35 15 589 ist eine Halterung zur Anbringung von Fahrradteilen entnehmbar, bei der ein relativ steifes, bandartiges Teil um den Trägerstab herum gelegt wird. Die beiden Enden dieses Teils, die parallel zueinander verlaufen und bezogen auf die Trägerstabachse radial nach außen ragen, tauchen dabei in einen rechteckförmigen Aufnahmeraum eines Sockelteils ein. Mittels einer Kombination aus Schraube und Mutter wird das Sockelteil an dem Trägerstab festgelegt, wobei die Eingriffsansätze aufweisende Mutter beim Anziehen in Ausbauchungen der beiden Enden des bandartigen Teils eintaucht, wodurch diese in Ausnehmungen des Sockelteils eingreifen und so eingreifen und so das Sockelteil über das bandartige Teil an dem Trägerstab verspannen.

Auch bei dieser kompliziert aufgebauten Halterung muß die Spannvorrichtung jedesmal gelöst werden, wenn die Position der Halterung an dem Trägerstab korrigiert bzw. verändert werden muß.

Aus der DE-A-3 201 135 ist eine Befestigungsvorrichtung bekannt, die der Befestigung von Gegenständen an Trägerrohren dienen soll. Diese Befestigungsvorrichtung umfaßt ein Klemmband, welches um das jeweilige Rohr gelegt wird, so daß sich seine beiden Enden überlappen. Die sich überlappenden Enden werden auf ein Rohrauflagestück gelegt, welches mit Haltevorsprüngen versehen ist. Das Klemmband ist mit Löchern versehen, insbesondere im Überlappungsbereich der beiden Enden, so daß die beiden Enden des Klemmbands mit diesen Löchern auf die Haltevorsprünge aufgeklippst werden können. Damit wird eine vorläufige Umschlingung des Klemmbands und des Rohrauflagestücks erreicht. Im Bereich des Rohrauflagestücks wird dann ein Sockelteil an das Rohr angenähert, so daß die sich überlappenden Enden des Klemmbands und das zwischen Rohr und Klemmbandenden liegende Rohrauflagestück von einem Hohlraum des Sockelteils aufgenommen werden und dieser Sockelteil sich an dem Klemmband außerhalb des Überlappungsbereichs abstützt. Dann wird eine Spannschraube durch eine rohrferne Wand des Sockelteils und sich überlagernde Löcher der überlappten Klemmbandenden in eine Schraubfassung des Rohrauflagestücks eingeschraubt. Durch diese Verschraubung wird das Rohrauflagestück an die Endwand des Sockelteils angenähert und damit das Klemmband gegen die Umfangsfläche des Trägerohrs gespannt. Auf dem Sockelteil kann sodann der Gegenstand durch weitere Befestigungsschrauben befestigt werden.

Es ist Aufgabe der vorliegenden Erfindung, eine Halterung zur Anbringung eines Anbauteils an einem Trägerstab, insbesondere einem Trägerstab eines Fahrzeugrahmens, z.B. Fahrradrahmens zu schaffen, die sich bei einfachem Aufbau leicht in der gewünschten Position am Trägerstab anbringen läßt.

Vorstehende Aufgabe wird dadurch gelöst, daß an den beiden Endbereichen des Klemmbands Vorfixierungsmittel vorgesehen sind, welche beim Herumlegen des Klemmbands um den Trägerstab, mit Überlappung der Endbereiche, in Eingriff treten und eine die Vorfixierung an dem Trägerstab bewirkende Einengung des Klemmbands an dem Trägerstab aufrechterhalten, und daß am Anbauteil eine Spannschraube gelagert ist, welche in beide Endbereiche eingreifend, zumindest mit dem innenliegenden Endbereich verschraubbar ist. Diese einfach aufgebaute Halterung ermöglicht, daß das Klemmband an dem Trägerstab vorfixiert werden kann, wodurch die Position des Klemmbands an dem Trägerstab vor dem eigentlichen Festspannen überprüft werden kann. Da die Spannschraube in beide Endbereiche eingreift, wird sichergestellt, daß sich die Vorfixierung nach dem Festlegen der Halterung nicht mehr lösen kann. Somit dienen die Vorfixierungsmittel auch als eine weitere Spannvorrichtung für die Halterung.

Die Vorfixierungsmittel können durch die unterschiedlichsten Elemente gebildet sein. So ist es denkbar, daß ein Klettverschluß vorgesehen wird, wobei an dem einen Endbereich des Klemmbands die Bürste und an dem anderen die Häkchen angebracht sind. Eine weitere Möglichkeit besteht darin, daß an einem ersten und einem zweiten Endbereich zusammenwirkende Rastverzahnungen angebracht sind.

Werden die Rastverzahnungen dabei mit solcher Flankenstellung ausgeführt, daß sie beim Spannen des Klemmbandes um den Trägerstab herum übereinander hinweggleiten und ein entspannendes Rückgleiten nicht möglich ist, so wird hierdurch eine Selbstsicherung der Rastverzahnung erreicht.

Zu der Vorfixierung des Klemmbands treten die an den beiden Endbereichen des Bands angebrachten Vorfixierungsmittel mit Überlappung vollflächig in Eingriff. Sind die beiden Endbereiche dabei seitlich zueinander versetzt, so kann dies dazu führen, daß sich beim endgültigen Festlegen des Klemmbands die Vorfixierungsmittel wieder voneinander lösen. Um ein vollständiges Überlappen der mit den Vorfixierungsmitteln versehenen Endbereiche zu gewährleisten, wird vorgeschlagen, daß an dem ersten Endbereich des Klemmbands ein Durchgang für den zweiten Endbereich vorgesehen ist und daß die Vorfixierungsmittel beim Durchschieben oder Durchziehen des zweiten Endbereichs durch den Durchgang des ersten Endbereichs miteinander in Eingriff treten. Hierdurch wird erreicht, daß beim Überlappen der zweite Endbereich geführt wird und so die Vorfixierungsmittel vollflächig miteinander in Eingriff treten.

Damit bereits während des Durchziehens bzw. Durchschiebens des zweiten Endbereichs durch den Durchgang des ersten Endbereichs ein Rückgleiten nicht mehr möglich ist, wird weiter vorgeschlagen, daß die Vorfixierungsmittel als Rastverzahnungen ausgebildet sind und daß eine Rastverzahnung des ersten Endbereichs in Einsteckrichtung des Durchgangs vor dem Durchgang angebracht ist. Es besteht aber selbstverständlich auch die Möglichkeit, daß die Rastverzahnung in Einsteckrichtung nach dem Durchgang angeordnet ist.

Die endgültige Festlegung des Klemmbands bzw. der Halterung erfolgt durch eine Spannschraube, die durch beide Endbereiche hindurchgreifend, zumindest mit dem innenliegenden Endbereich verschraubbar ist. Damit eine ausreichend große Spannkraft aufgebracht werden kann und hierfür eine ausreichende Gewindelänge für die Spannschraube zur Verfügung steht, ist es vorteilhaft, daß ein erster Endbereich des Klemmbands verdickt ist und daß in der Verdickung eine Innengewindebohrung oder eine Bohrung zur Aufnahme eines selbstschneidenden Außengewindes der Spannschraube vorgesehen ist.

Damit die beiden Endbereiche sich nicht seitlich zueinander versetzt überlappen können, wird weiterhin vorgeschlagen, daß an einem ersten Endbereich ein Durchgang durch einen den ersten Endbereich auf seiner trägerstabfernen Seite überlagernden Steg gebildet ist und daß dieser Steg von der Spannschraube durchsetzbar ist. Gegenüber einem eine geschlossene Innenfläche aufweisenden Durchgang hat dieser Durchgang den Vorteil, daß der zweite Endbereich quer zu seiner Erstreckungsrichtung von der Seite in den Durchgang eingeführt wird und anschließend durch die Vorfixierungsmittel festgelegt wird. Hierdurch vereinfacht sich das Einfädeln des zweiten Endbereichs in den Durchgang.

Damit beim Festlegen des Klemmbands von Hand der zweite Endbereich nicht aus der Hand rutschen kann, ist es vorteilhaft, daß an einem trägerstabfernen Endbereich, vorzugsweise in der Nähe der Vorfixierungsmittel, eine Griffleiste auf der trägerstabfernen Seite vorgesehen ist.

Um eine möglichst vollständige Anlage des Klemmbands bzw. der Halterung zu erreichen, wird vorgeschlagen, daß der verdickte Endbereich eine dem Trägerstabquerschnitt angepaßte, insbesondere zylindrische Anlagefläche aufweist.

Die Spannschraube greift beim Festspannen des Klemmbands durch die beiden sich überlappenden Endbereiche hindurch. Um ein und dasselbe Klemmband für Trägerstäbe mit unterschiedlichen Durchmessern verwenden zu können, ist es vorteilhaft, daß in dem überlappungsäußeren Endbereich eine Mehrzahl von Durchgangsöffnungen oder Vertiefungen für das Einstecken der Spannschraube vorgesehen sind. Handelt es sich bei der Spannschraube um eine Schraube mit selbstschneidendem Außengewinde, so genügt eine Vertiefung in dem Klemmband, da die Schraube beim Festziehen sich die Durchgangsöffnung selber schneidet.

Damit das Klemmband das Gewicht des Anbauteils nicht ausschließlich trägt, ist es vorteilhaft, daß an dem Anbauteil Stützflächen zur Abstützung an dem Trägerstab beidseits des Klemmbands angebracht sind.

Als Anbauteil können die unterschiedlichsten Elemente vorgesehen werden. So ist es beispielsweise möglich, daß das Anbauteil als Befestigungsaufnahme für ein Schloß ausgebildet ist, welches während der Fahrt durch Zusammenkuppeln von zwei Schloßteilen in formschlüssigen Eingriff mit der Befestigungsaufnahme festgelegt ist. Hierdurch wird u.a. erreicht, daß das Schloß während der Fahrt unverlierbar an dem Fahrzeugrahmen festgelegt ist.

Weiter wird vorgeschlagen, daß die Spannschraube bei angekuppeltem Schloß durch mindestens einen der Schloßteile für eine Lösebewegung unzugänglich gemacht ist, wodurch bei angekuppeltem Schloß die Halterung von dem Fahrzeugrahmen nicht abgenommen werden kann.

Es können für die unterschiedlichsten Schlösser Befestigungsaufnahmen vorgesehen werden. So ist es beispielsweise möglich, daß die Befestigungsaufnahme einen topfförmigen Aufnahmeraum für einen im wesentlichen zylindrischen, absperrbaren Schloßteil aufweist und daß in dem Boden des topfförmigen Aufnahmeraums eine Öffnung für das Durchstecken eines Schließzapfens vorgesehen ist, welcher durch die Öffnung hindurch in Schließeingriff mit dem zylindrischen Schloßteil bringbar ist. Da der Schloßkörper durch die Topfinnenwände zentriert wird, wird hierdurch erreicht, daß die Öffnung in der Befestigungsaufnahme immer mit der Einstöcköffnung des Schlosses fluchtet.

Damit die Spannschraube besonders leicht an dem Klemmband ansetzbar ist, wird weiterhin vorgeschlagen, daß die Spannschraube durch diametral einander gegenüberliegende Durchtrittsöffnungen des topfförmigen Aufnahmeraums einsetzbar ist.

Damit der Trägerstab, der häufig oberflächenbehandelt, insbesondere lackiert sein kann, durch das Klemmband nicht verkratzt wird, ist es vorteilhaft, daß das Klemmband aus Kunststoff ist. Werden die Vorfixierungsmittel darüber hinaus als Rastverzahnungen ausgeführt, lassen sich diese bereits während des Formgebungsvorgangs für das Klemmband herstellen.

Weitere vorteilhafte Ausgestaltungen der Erfindung und Ausführungsbeispiele werden an Hand der Zeichnung erläutert. Es zeigt:
- Fig. 1: einen Längsschnitt durch eine Halterung mit einem in einem Anbauteil eingesetzten Schloß;
- Fig. 2: eine Draufsicht auf die Halterung gemäß Fig. 1;
- Fig. 3: eine Ansicht eines Klemmbands gemäß Fig. 2;
- Fig. 4: einen Längsschnitt durch das Klemmband entlang der Linie IV-IV in Fig. 3;
- Fig. 4a: eine in der Fig. 4 mit X bezeichnete Einzelheit;
- Fig. 5: einen Schnitt entlang der Linie V-V in Fig. 4 und
- Fig. 6: einen Längsschnitt durch ein Anbauteil gemäß Fig. 1.

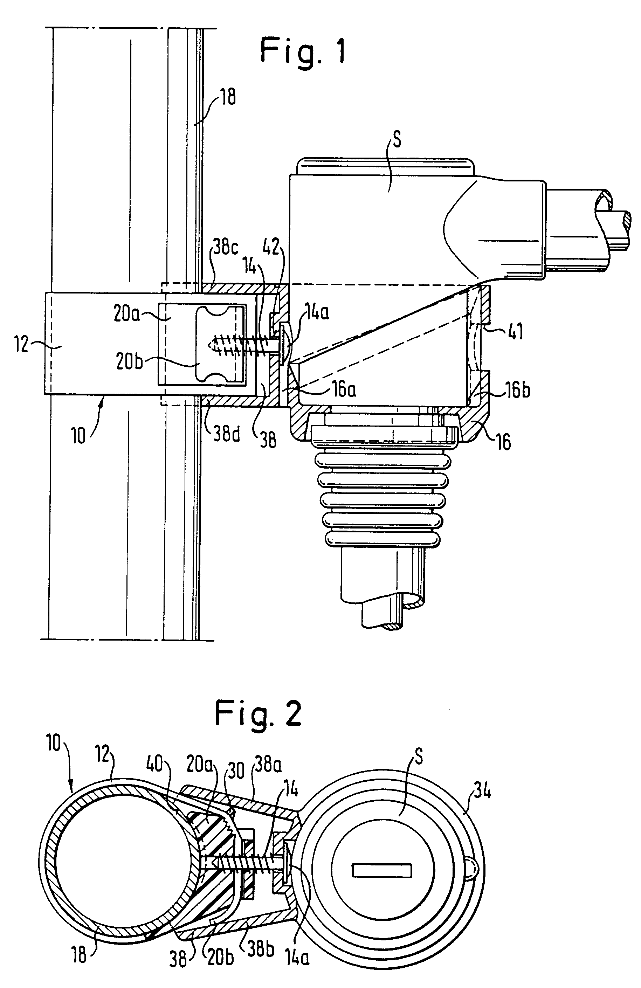

In den Fig. 1 und 2 ist eine erfindungsgemäße Halterung allgemein mit 10 bezeichnet. Die Halterung 10 umfaßt ein Klemmband 12 und eine als Spannvorrichtung vorgesehene Spannschraube 14. Die Halterung 10 dient zur Anbringung eines weiter unten näher beschriebenen Anbauteils 16 an einem Trägerstab 18, der beispielsweise Teil eines Fahrradrahmens sein kann.

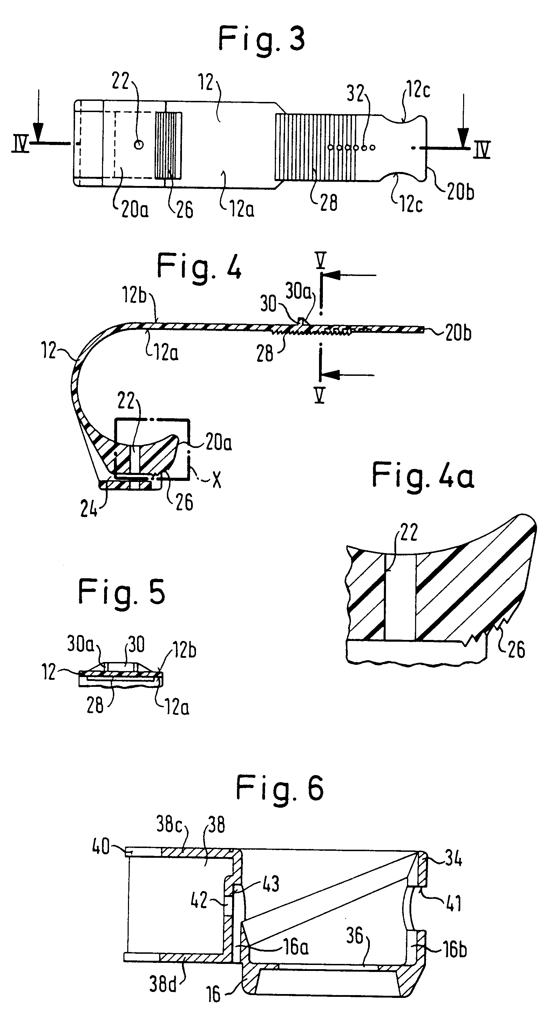

Wie aus den Fig. 3 und 4 hervorgeht, weist das vorzugsweise aus Kunststoff hergestellte Klemmband 12 zwei unterschiedlich gestaltete Endbereiche 20a,20b auf. Der Endbereich 20a ist verdickt und besitzt eine quer zur Erstreckungsrichtung des Klemmbands verlaufende Durchgangsbohrung 22. Diese Durchgangsbohrung 22 dient zur Aufnahme der Spannschraube 14, die ein selbstschneidendes Gewinde aufweist. Selbstverständlich kann auch in der Durchgangsbohrung 22 ein Gewinde vorgesehen werden, wenn eine Schraube verwendet werden soll, die kein selbstschneidendes Gewinde besitzt. Die trägerstabnahe Seite 12a des Klemmbands 12 ist im Endbereich 20a mit einer konkaven Innenwölbung versehen, so daß sich dieser Endbereich 20a im wesentlichen vollflächig an dem Trägerstab 18 anlegen kann. Auf der trägerstabfernen Seite 12b verjüngt sich dieser Endbereich 20a bezogen auf die Trägerstabachse radial nach außen, wodurch das Aufschieben des Anbauteils 16 erleichtert wird. Der verdickte Endbereich 20a des Klemmbands 12 ist darüber hinaus mit einem quer zur Durchgangsbohrung 22 verlaufenden Durchgang 24 versehen, der zur Aufnahme des zweiten, laschenförmigen Endbereichs 20b des Klemmbands 12 dient. Der Durchgang 24, der beispielsweise durch einen abstehenden Steg oder durch eine eine geschlossene Innenwand aufweisende Durchbrechung gebildet sein kann, verläuft dabei innerhalb des verdickten Endbereichs 20a näher an der trägerstabfernen Seite 12b als an der trägerstabnahen Seite 12a des Klemmbands 12. Zum Festlegen des Klemmbands 12 wird der laschenförmige Endbereich 20b in Fig. 4 von rechts in den Durchgang 24 eingeschoben. In Einschieberichtung vor dem Durchgang 24 ist der verdickte Endbereich 20a mit einer Rastverzahnung 26 versehen, wie dies besonders deutlich aus der Fig. 4a hervorgeht.

Der laschenförmige Endbereich 20b, der nahe an seinem Ende am Seitenrand zwei Griffmulden 12c besitzt, weist an der trägerstabnahen Seite 12a des Klemmbands 12 mit einem gewissen Abstand zu seinem Ende eine Rastverzahnung 28 auf. Diese Rastverzahnung 28 gelangt mit der Rastverzahnung 26 des verdickten Endbereichs 20a beim Durchschieben bzw. Durchziehen des laschenförmigen Endbereichs 20b durch den Durchgang 24 des Endbereichs 20a in Eingriff. Die Zähne beider Rastverzahnungen 26,28 sind dabei so orientiert, daß sie beim Durchziehen bzw. Durchschieben des laschenförmigen Endbereichs 20b übereinander hinweggleiten können, aber ein entspannendes Rückgleiten nicht möglich ist. An der trägerstabfernen Seite 12b des Klemmbands 12 ist der laschenförmige Endbereich 20b darüber hinaus mit einer Griffleiste 30 versehen, wie diese auch aus Fig. 5 hervorgeht. Im Bereich seiner Rastverzahnung 28 sowie zwischen der Rastverzahnung 28 und seinem Ende weist der laschenförmige Endbereich 20b des Klemmbands 12 in seiner Mitte mehrere in Erstreckungsrichtung des Klemmbands 12 hintereinander angeordnete Vertiefungen 32 auf. Diese Vertiefungen 32 dienen dazu, das gleiche Klemmband 12 bei unterschiedlichen Durchmessern von verschiedenen Trägerstäben verwenden zu können. Je nach Durchmesser des Trägerstabs 18 kommt die eine oder die andere Vertiefung 32 in Flucht mit der Durchgangsbohrung 22 in dem verdickten Endbereich 20a des Klemmbands 12. Da das Klemmband 12 aus Kunststoff hergestellt ist, genügt es, daß an dieser Stelle Vertiefungen 32 vorgesehen sind, da die selbstschneidende Schraube 14 diese Vertiefungen 32 zu Durchgangsbohrungen beim Eindrehen erweitert.

An die Halterung 10 können die unterschiedlichsten Anbauteile angebracht werden. In dem Ausführungsbeispiel gemäß der Fig. 1 und 2 handelt es sich bei dem Anbauteil 16 um eine Aufnahme für ein Fahrradschloß S. Ein derartiges Schloß S ist beispielsweise aus dem DE-Patent ..., der deutschen Patentanmeldung P 39 28 545 entnehmbar. Wie aus der Fig. 6 hervorgeht, besteht die Aufnahme 16 für dieses Schloß S zum einen aus einem Topf 34, der in seinem Topfboden eine gestufte Öffnung 36 zum Durchschieben eines Schließklobens des in Fig. 1 teilweise dargestellten Schlosses S aufweist. Zum anderen erstreckt sich von der äußeren Mantelfläche des Topfs 34 radial auswärts ein hohler, in radialer Richtung offener Befestigungsabschnitt 38, der über die beiden sich überlappenden Endbereiche 20a,20b des an dem Trägerstab 18 angebrachten Klemmbands 12 geschoben wird. Die in Fig. 1 vertikalen Seitenwände 38a,38b des Befestigungsabschnitts 38 sind dabei so angeordnet, daß sich der Befestigungsabschnitt 38 in Richtung zu dem Topf 34 verjüngt (vgl. Fig. 2). Die Höhe des hohlen Befestigungsabschnitts 38 entspricht dabei der Höhe des Klemmbands 12. Die Endabschnitte der in Fig. 1 horizontalen Seitenwände 38c,38d des Befestigungsabschnitts 38 weisen dabei ebenfalls eine konkave, im wesentlichen zylindrische Innenwölbung auf, die Stützflächen 40 bilden, mit denen die Aufnahme 16 sich an dem Trägestab 18 abstützt und somit das Klemmband 12 teilweise von dem Gewicht der Aufnahme 16 und dem darin befindlichen Schloß S entlastet. Diametral gegenüber dem Befestigungsabschnitt 38 ist die Schloßaufnahme 16 in ihrer Topfwand mit einer Durchgangsbohrung 41 versehen. Die Bohrungsachse dieser Durchgangsbohrung 41 fluchtet mit der Bohrungsachse einer weiteren Durchgangsbohrung 42 auf der diametral gegenüberliegenden Seite der Topfwand der Schloßaufnahme 16, die eine Durchgangsverbindung zwischen dem Topfinnenraum und dem nach außen hin offenen, hohlen Befestigungsabschnitt 38 bildet. Die Bohrungsachsen der Durchgangsbohrungen 41,42 sind dabei so angeordnet, daß sie mit der Mittellinie des hohlen Befestigungsabschnittes 38 zusammenfallen, wodurch sich die Schraube 14 besonders leicht an der Durchgangsbohrung 22 des verdickten Endbereichs 20a des Klemmbands 12 ansetzen läßt. Damit der Schraubenkopf 14a der Schraube 14 nicht in den Topfinnenraum hineinragt, ist die Topfwand an dieser Stelle mit einer in Fig. 1 vertikal verlaufenden Nut 16a versehen, deren Breite der Breite des Kopfes 14a der Schraube 14 entspricht.

Um die erfindungsgemäße Halterung 10 an dem Trägerstab 18 festzulegen, wird zunächst der verdickte Endbereich 20a des Klemmbands 12 an dem Trägerstab 18 in der gewünschten Position angelegt. Anschließend wird das Klemmband 12 um den Trägerstab 18 herumgeschlungen und das laschenförmige Ende 20b des Klemmbands 12 durch den Durchgang 24 des verdickten Endes 20a hindurchgeschoben. Hierbei greifen die Zähne der beiden Rastverzahnungen 26,28 der Endbereiche 20a,20b ineinander. Das Klemmband 12 ist somit an dem Trägerstab 18 vorfixiert. Anschließend kann die Schloßaufnahme 16 mit ihrem Befestigungsabschnitt 38 auf das so festgelegte Klemmband 12 aufgeschoben werden. Damit beim Aufschieben der Schloßaufnahme 16 der Befestigungsabschnitt 38 nicht an der Griffleiste 30 des Klemmbands 12 hängen bleibt, ist die Griffleiste 30 mit Einführrampen bzw. einer Einführschräge 30a versehen (vgl. Fig. 4). Nach Überprüfung der Position kann nun durch die Durchgangsbohrungen 41,42 der Schloßaufnahme 16 die Spannschraube 14 mittels eines Drehwerkzeuges hindurchgeführt und an die mit der Durchgangsbohrung 22 des verdickten Endbereiches 20a fluchtende Vertiefung 32 angesetzt werden. Beim Eindrehen schneidet sich diese Schraube 14 in den verdickten Endbereich 20a ein Gewinde ein, wobei sie gleichzeitig eine der Vertiefungen 32 des laschenförmigen Endbereichs 20b des Klemmbands 12 zu einer Durchgangsbohrung erweitert. Die Schraube 14 wird soweit in den verdickten Endbereich 20a des Klemmbands 12 eingedreht, bis ihr Kopf 14a zur Anlage an dem Nutgrund 43 der Schloßaufnahme 16 gelangt. Durch Weiterdrehen der Schraube 14 wird dann die Schloßaufnahme 16 weiter gegen das Klemmband 12 gespannt, wodurch die Schloßaufnahme 16 und das Klemmband 12 fest an dem Trägerstab 18 festgelegt sind. Das Klemmband 12 und die Schloßaufnahme 16 sind somit fest an dem Trägerstab 18 angebracht. Anschließend kann das Fahrradschloß S in die Schloßaufnahme 16 eingesetzt werden. Hierzu wird das mit einem nicht näher dargestellten Schließwerk versehene Schloßteil von oben in den Topf 34 eingesetzt. Daraufhin wird der Schließkloben in Fig. 1 von unten durch die Öffnung 36 der Schloßaufnahme 16 hindurchgeschoben, bis er an den Absatz der Öffnung 36 stößt. Nach Verriegeln der beiden Schloßteile ist das Schloß S in der Schloßaufnahme 16 festgelegt. Gleichzeitig wird die Spannschraube 14 abgedeckt, wodurch ein Lösen der Spannschraube 14 bei eingesetztem Schloß S nicht mehr möglich ist. Damit das Schloß S gegenüber der Befestigungsaufnahme 16 zentriert wird, weist die Befestigungsaufnahme 16 eine in Fig. 1 vertikal verlaufende Nut 16b auf, in die ein an der Außenseite des Schlosses S angebrachter Vorsprung beim Einschieben des Schlosses S eingreift.

## Patentansprüche

1. Halterung zur Anbringung eines Anbauteils an einem Trägerstab, insbesondere einem Trägerstab eines Fahrzeugrahmens, z.B. Fahrradrahmens, umfassend ein Klemmband (12) zum Umschließen des Trägerstabs (18) und eine Spannvorrichtung (14) zum gleichzeitigen Klemmen des Klemmbands (12) sowie Festlegen des Anbauteils (16) an dem Klemmband (12), **dadurch gekennzeichnet,** daß an den beiden Endbereichen (20a,20b) des Klemmbands (12) Vorfixierungsmittel (26,28) vorgesehen sind, welche beim Herumlegen des Klemmbands (12) um den Trägerstab (18), mit Überlappung der Endbereiche (20a,20b), in Eingriff treten und eine die Vorfixierung an dem Trägerstab (18) bewirkende Einengung des Klemmbands (12) an dem Trägerstab (18) aufrechterhalten, und daß am Anbauteil (16) eine Spannschraube (14) gelagert ist, welche in die beiden Endbereiche (20a,20b) eingreifend, zumindest mit dem innenliegenden Endbereich (20a) verschraubbar ist.

2. Halterung nach Anspruch 1, **dadurch gekennzeichnet,** daß an einem ersten und einem zweiten Endbereich (20a,20b) zusammenwirkende Rastverzahnungen (26,28) angebracht sind.

3. Halterung nach Anspruch 2, **dadurch gekennzeichnet,** daß die Rastverzahnungen (26,28) mit solcher Flankenstellung ausgeführt sind, daß sie beim Spannen des Klemmbands (12) um den Trägerstab (18) herum übereinander hinweggleiten und ein entspannendes Rückgleiten nicht möglich ist.

4. Halterung nach einem der Ansprüche 1 - 3, **dadurch** **gekennzeichnet,** daß an dem ersten Endbereich (20a) des Klemmbands (12) ein Durchgang (24) für den zweiten Endbereich (20b) vorgesehen ist und daß die Vorfixierungsmittel (26,28) beim Durchschieben oder Durchziehen des zweiten Endbereichs (20b) durch den Durchgang (24) des ersten Endbereichs (20a) miteinander in Eingriff treten.

5. Halterung nach Anspruch 4, **dadurch gekennzeichnet**, daß die Vorfixierungsmittel (26,28) als Rastverzahnungen ausgebildet sind und daß eine Rastverzahnung (26) des ersten Endbereichs (20a) in Einsteckrichtung des Durchgangs (24) vor dem Durchgang (24) angebracht ist.

6. Halterung nach einem der Ansprüche 1 - 5, **dadurch** **gekennzeichnet**, daß ein erster Endbereich (20a) des Klemmbands (12) verdickt ist und daß in der Verdikkung eine Innengewindebohrung oder eine Bohrung (22) zur Aufnahme eines selbstschneidenden Außengewindes der Spannschraube (14) vorgesehen ist.

7. Halterung nach einem der Ansprüche 1 - 6, **dadurch** **gekennzeichnet**, daß an einem ersten Endbereich (20a) ein Durchgang durch einen den ersten Endbereich (20a) auf seiner trägerstabfernen Seite (12b) überlagernden Steg gebildet ist und daß dieser Steg von der Spannschraube (14) durchsetzbar ist.

8. Halterung nach einem der Ansprüche 1 - 7, **dadurch gekennzeichnet,** daß an einem trägerstabfernen Endbereich (20b), vorzugsweise in der Nähe der Vorfixierungsmittel (26,28), eine Griffleiste (30) auf der trägerstabfernen Seite (12b) vorgesehen ist.

9. Halterung nach Anspruch 6, **dadurch gekennzeichnet,** daß der verdickte Endbereich (20a) eine dem Trägerstabquerschnitt angepaßte, insbesondere zylindrische Anlagefläche (40) aufweist.

10. Halterung nach einem der Ansprüche 1 - 9, **dadurch** **gekennzeichnet,** daß in dem überlappungsäußeren Endbereich (20b) eine Mehrzahl von Durchgangsöffnungen oder Vertiefungen (32) für das Einsetzen der Spannschraube (14) vorgesehen sind.

11. Halterung nach einem der Ansprüche 1 - 10, **dadurch** **gekennzeichnet,** daß an dem Anbauteil (16) Stützflächen (40) zur Abstützung an dem Trägerstab (18) beidseits des Klemmbands (12) angebracht sind.

12. Halterung nach einem der Ansprüche 1 - 11, **dadurch** **gekennzeichnet,** daß das Anbauteil (16) als Befestigungsaufnahme für ein Schloß (S) ausgebildet ist, welches während der Fahrt durch Zusammenkuppeln von zwei Schloßteilen in formschlüssigem Eingriff mit der Befestigungsaufnahme (16) festgelegt ist.

13. Halterung nach einem der Ansprüche 1 - 12, **dadurch gekennzeichnet**, daß die Spannschraube (14) bei angekuppeltem Schloß (S) durch mindestens einen der Schloßteile für eine Lösebewegung unzugänglich gemacht ist.

14. Halterung nach Anspruch 12 oder 13, **dadurch gekennzeichnet**, daß die Befestigungsaufnahme (16) einen topfförmigen Aufnahmeraum (34) für einen im wesentlichen zylindrischen, absperrbaren Schloßteil aufweist und daß in dem Boden des topfförmigen Aufnahmeraums (34) eine Öffnung (36) für das Durchstecken eines Schließzapfens vorgesehen ist, welcher durch die Öffnung (36) hindurch in Schließeingriff mit dem zylindrischen Schloßteil bringbar ist.

15. Halterung nach Anspruch 14, **dadurch gekennzeichnet,** daß die Spannschraube (14) durch diametral einander gegenüberliegende Durchtrittsöffnungen (41,42) des topfförmigen Aufnahmeraums (34) einsetzbar ist.

16. Halterung nach einem der Ansprüche 1 - 15, **dadurch** **gekennzeichnet**, daß das Klemmband (12) aus Kunststoff ist.

## Claims

1. A fixing device for attaching an add-on piece to a carrier bar, especially a carrier bar of a vehicle frame, e.g. bicycle frame, comprising a clamp fitting (12) for surrounding the carrier bar (18) and a fastening device (14) for simultaneous clamping of the clamp fitting (12) and fastening of the add-on piece (16) to the clamp fitting (12), characterized in that pre-fixing means (26, 28) are provided at both end areas (20a, 20b) of the clamp fitting (12), which pre-fixing means (26, 28) mesh upon positioning of the clamp fitting (12) about the carrier bar (18) with overlapping of the end areas (20a, 20b) and maintain contraction, effecting pre-fixing to the carrier bar (18), of the clamp fitting (12) at the carrier bar (18), and in that a locking screw (14) is accommodated on the add-on piece (16), which locking screw (14) can be screwed to engage with the two end areas (20a, 20b), and at least with the internal end area (20a).

2. A fixing device according to claim 1, characterized in that interacting locking teeth (26, 28) are attached to a first and a second end area (20a, 20b).

3. A fixing device according to claim 2, characterized in that the locking teeth (26, 28) are constructed with such a flank position that they slide over each other upon tensioning of the clamp fitting (12) about the carrier bar (18) and releasing reverse sliding is impossible.

4. A fixing device according to any one of claims 1 - 3, characterized in that a passage (24) for the second end area (20b) is provided at the first end area (20a) of the clamp fitting (12) and in that the pre-fixing means (26, 28) mesh together upon pushing or pulling through of the second end area (20b) through the passage (24) in the first end area (20a).

5. A fixing device according to claim 4, characterized in that the pre-fixing means (26, 28) are constructed as locking teeth and in that locking teeth (26) of the first end area (20a) are mounted in front of the passage (24) in the insert direction of the passage (24).

6. A fixing device according to any one of claims 1 - 5, characterized in that a first end area (20a) of the clamp fitting (12) is thickened and in that in the thickened part there is provided a tapped hole or a hole (22) for accommodating a self-cutting external thread of the locking screw (14).

7. A fixing device according to any one of claims 1 - 6, characterized in that at a first end area (20a) there is formed a passage through a web superjacent the first end area (20a) on its side (12b) remote from the carrier bar and in that the locking screw (14) may pass through this web.

8. A fixing device according to any one of claims 1 - 7, characterized in that on the side (12b) remote from the carrier bar, preferably in the vicinity of the pre-fixing means (26, 28), there is provided a handle strip (30) at an end area (20b) remote from the carrier bar.

9. A fixing device according to claim 6, characterized in that the thickened end area (20a) comprises an, especially cylindrical, bearing surface (40) conformed to the carrier bar cross section.

10. A fixing device according to any one of claims 1 - 9, characterized in that a plurality of passage openings or recesses (32) are provided in the overlap-external end area (20b) for the insertion of the locking screw (14).

11. A fixing device according to any one of claims 1 - 10, characterized in that support surfaces (40) are mounted on the add-on piece (16) for support on the carrier bar (18) on both sides of the clamp fitting (12).

12. A fixing device according to any one of claims 1 - 11, characterized in that the add-on piece (16) is constructed as a fastening receptacle for a lock (S), which is secured in positive engagement with the fastening receptacle (16) during travel by the coupling-together of two lock parts.

13. A fixing device according to any one of claims 1 - 12, characterized in that the locking screw (14) is made inaccessible to loosening movement when the lock (S) is connected by at least one of the lock parts.

14. A fixing device according to claim 12 or claim 13, characterized in that the fastening receptacle (16) comprises a cup-shaped receiving space (34) for a substantially cylindrical, lockable lock part and in that an opening for through-insertion of a locking pin is provided in the base of the cup-shaped receiving space (34), which locking pin may be brought through the opening (36) into locking engagement with the cylindrical lock part.

15. A fixing device according to claim 14, characterized in that the locking screw (14) is insertable through diametrically opposing passage openings (41, 42) in the cup-shaped receiving space (34).

16. A fixing device according to any one of claims 1 - 15, characterized in that the clamp fitting (12) is of plastics material.

## Revendications

1. Fixation destinée au montage d'une pièce rapportée sur une barre de support, en particulier sur une barre de support d'un cadre de véhicule, par exemple d'un cadre de bicyclette, comprenant un collier de serrage (12) destiné à entourer la barre de support (18) et un dispositif de serrage (14) pour, simultanément, serrer le collier de serrage (12) et fixer la pièce rapportée (16) sur le collier de serrage (12), caractérisée en ce que sur les deux zones d'extrémité (20a, 20b) du collier de serrage (12) des moyens de prémontage (26, 28) sont prévus, lesquels, lors de la mise en place du collier de serrage (12) autour de la barre de support (18), viennent en prise les uns avec les autres, compte tenu d'une superposition des zones d'extrémité (20a, 20b) et maintiennent le resserrage du collier de serrage (12) sur la barre de support (18), ce qui se traduit par le prémontage sur la barre de support (18), et en ce qu'une vis de serrage (14) est supportée sur la pièce rapportée (16), laquelle vis de serrage, venant en prise dans les deux zones d'extrémité (20a, 20b), peut être vissée au moins avec la zone d'extrémité (20a) intérieure.

2. Fixation selon la revendication 1, caractérisée en ce que des dentures d'accrochage mutuel (26, 28) sont réalisées sur une première et une deuxième zones d'extrémité (20a, 20b).

3. Fixation selon la revendication 2, caractérisée en ce que les dentures d'accrochage (26, 28) sont conçues avec des flancs positionnés de manière telle, qu'elles glissent les unes sur les autres, lors du serrage du collier de serrage (12) autour de la barre de support (18), et qu'un glissement en arrière, provoquant le desserrage, n'est pas possible.

4. Fixation selon l'une quelconque des revendications 1 à 3, caractérisée en ce qu'un passage (24) est prévu dans la première zone d'extrémité (20a) du collier de serrage (12), pour la deuxième zone d'extrémité (20b), et en ce que les moyens de prémontage (26, 28) viennent en prise les uns avec les autres, lorsque l'on pousse ou que l'on tire la deuxième zone d'extrémité (20b) à travers le passage (24) de la première zone d'extrémité (20a).

5. Fixation selon la revendication 4, caractérisée en ce que les moyens de prémontage (26, 28) sont conformés comme des dentures d'accrochage et en ce qu'une denture d'accrochage (26) de la première zone d'extrémité (20a) est disposée dans la direction d'insertion du passage (24), en avant du passage (24).

6. Fixation selon l'une quelconque des revendications 1 à 5, caractérisée en ce qu'une première zone d'extrémité (20a) du collier de serrage (12) est épaissie et en ce qu'un trou taraudé ou un trou (22) destiné à recevoir un filetage auto-taraudeur de la vis de serrage (14) est prévu dans la surépaisseur.

7. Fixation selon l'une quelconque des revendications 1 à 6, caractérisée en ce que dans une première zone d'extrémité (20a) un passage est ménagé à travers une patte recouvrant la première zone d'extrémité (20a) sur son côté (12b) éloigné de la barre de support, et en ce que cette patte peut être traversée par la vis de serrage (14).

8. Fixation selon l'une quelconque des revendications 1 à 7, caractérisée en ce que dans une zone d'extrémité (20b) éloignée de la barre de support, une languette de préhension (30) est prévue sur le côté (12b) éloigné de la barre de support, de préférence à proximité des moyens de prémontage (26, 28).

9. Fixation selon la revendication 6, caractérisée en ce que la zone d'extrémité (20a), épaissie, présente une surface d'appui (40) notamment cylindrique, adaptée à la section transversale de la barre de support.

10. Fixation selon l'une quelconque des revendications 1 à 9, caractérisée en ce que dans la zone d'extrémité (20b), extérieure dans la superposition, une pluralité d'ouvertures traversantes ou d'évidements (32) sont prévus pour insérer la vis de serrage (14).

11. Fixation selon l'une quelconque des revendications 1 à 10, caractérisée en ce que des surfaces d'appui (40) sont prévues sur la pièce rapportée (16) pour prendre appui sur la barre de support (18) des deux côtés du collier de serrage (12).

12. Fixation selon l'une quelconque des revendications 1 à 11, caractérisée en ce que la pièce rapportée (16) est conformée en tant que boîtier de fixation d'une serrure (S), laquelle, lorsque le véhicule se déplace, est fixée, en venant en prise par complémentarité de forme avec le boîtier de fixation (16), par couplage de deux pièces de serrure.

13. Fixation selon l'une quelconque des revendications 1 à 12, caractérisée en ce que, lorsque la serrure (S) est couplée, la vis de serrage (14) est rendue inaccessible par au moins l'une des pièces de serrure, si l'on veut opérer un mouvement de desserrage.

14. Fixation selon la revendication 12 ou 13, caractérisée en ce que le boîtier de fixation (16) présente un espace de logement en forme de creuset (34), destiné à une pièce de serrure de forme sensiblement cylindrique, pouvant être verrouillée, et en ce que, dans le fond de l'espace de logement en forme de creuset (34) une ouverture (36) est prévue, pour introduire un doigt de fermeture, lequel par l'intermédiaire de l'ouverture (36) peut venir en prise avec la pièce de serrure cylindrique, en vue d'une fermeture.

15. Fixation selon la revendication 14, caractérisée en ce que la vis de serrage (14) peut être introduite par des ouvertures traversantes (41, 42) de l'espace de logement en forme de creuset (34), diamétralement opposées l'une à l'autre.

16. Fixation selon l'une quelconque des revendications 1 à 15, caractérisée en ce que le collier de serrage (12) est réalisé en matière plastique.
